# DEMANDE DE BREVET EUROPEEN

(11) **EP 3 502 991 A1**
(43) Date de publication de la demande: **26.06.2019**
(21) Numéro de dépôt: 18208647.0
(22) Date de dépôt: 27.11.2018
(51) Int. Cl.: G06Q 20/12, G06Q 20/40, G06Q 20/16

(54) **PROCEDE ET DISPOSITIF DE VALIDATION D'UNE TRANSACTION DE PAIEMENT**

(30) Priorité: 21.12.2017 FR 1762723
(71) Demandeur: Orange, 75015 Paris (FR)
(72) Inventeur: LE GUILLOU, Xavier, 92326 CHATILLON (FR); BRUNEAU, Garry, 92326 CHATILLON (FR)
(74) Mandataire: Vidon Brevets & Stratégie

(57) **Abrégé**

L'invention concerne un procédé et un dispositif de validation d'une transaction de paiement mis en oeuvre par une passerelle domestique (PAS1) d'un utilisateur, ladite passerelle domestique étant apte à être reliée à un réseau de communication d'un opérateur auprès duquel l'utilisateur est abonné, le procédé de validation comprend:
- la réception (E42), en provenance d'un serveur de l'opérateur (S_BQ), d'une demande de validation d'une transaction de paiement relative à une transaction de paiement initiée (E40) par ledit utilisateur ou un autre utilisateur via un envoi (E41) au serveur d'une requête de transaction de paiement comprenant un identifiant de l'utilisateur fourni par l'opérateur,
- la réception (E43) en provenance d'un deuxième terminal (T1') de l'utilisateur d'une validation de la transaction de paiement,
- l'envoi (E44) au serveur (S_BQ) d'un message de validation de la transaction de paiement.

## Description

### 1. Domaine de l'invention

L'invention concerne les transactions de paiement électroniques réalisées via un réseau de communication.

### 2. Art Antérieur

Lorsqu'un utilisateur souhaite régler des achats sur Internet, par exemple via un site de e-commerce, plusieurs solutions de l'état de l'art s'offrent à lui. Par exemple, l'utilisateur peut fournir au site de e-commerce via lequel il réalise un achat, ses coordonnées bancaires, par exemple le numéro de sa carte bancaire. Le site de e-commerce interroge alors la banque de l'utilisateur en fournissant les données bancaires fournies par l'utilisateur pour que celle-ci valide le paiement des achats.

Dans certains cas, afin de sécuriser la transaction de paiement, suite à la demande de validation transmise par le site de e-commerce à la banque, l'utilisateur peut être redirigé vers une interface Internet de sa banque qui peut alors demander à l'utilisateur la confirmation de la demande de paiement. Par exemple, la banque transmet à l'utilisateur via un autre canal, par exemple via le réseau de téléphonie mobile, un code à entrer sur l'interface Internet de la banque pour confirmer la validation du paiement.

Un inconvénient de ce type de transaction de paiement est que le site de e-commerce a la possibilité d'enregistrer les coordonnées bancaires fournies par l'utilisateur, par exemple pour que celui-ci puisse les réutiliser plus tard pour d'autres transactions. Cependant, si le site de e-commerce est la cible de cyber-attaques, les coordonnées bancaires de l'utilisateur peuvent être volées et utilisées à son insu.

Une autre solution offerte à l'utilisateur pour régler des achats via Internet est de se procurer un numéro de carte bancaire virtuel auprès de sa banque. Un tel numéro de carte est alors dédié à la transaction de paiement pour lequel il a été demandé et ne peut être utilisé qu'une seule fois. Une telle solution évite que l'utilisateur fournisse au site de e-commerce ses vraies coordonnées bancaires. Toutefois, l'utilisateur doit demander à sa banque un numéro virtuel à chaque transaction de paiement qu'il souhaite faire, et donc transmettre ses identifiants de connexion au site de sa banque sur le réseau Internet à chaque fois.

Une autre solution offerte à l'utilisateur pour régler des achats via Internet est l'utilisation du service Internet+ qui permet à un utilisateur de régler ses achats via la facturation sur sa ligne Internet. Un tel service permet un paiement transparent pour l'utilisateur, il n'est pas nécessaire de transmettre au site de e-commerce ses coordonnées bancaires. Toutefois, l'utilisation d'un tel service peut être source d'abus ou de fraudes par des sites Internet peu scrupuleux qui peuvent alors facturer des services sans que l'utilisateur s'en rende compte. L'utilisation de ce type de service n'est en général pas recommandée aux utilisateurs.

Il existe donc un besoin d'améliorer l'état de la technique.

### 3. Exposé de l'invention

L'invention vient améliorer l'état de la technique. Elle concerne à cet effet un procédé de validation d'une transaction de paiement mis en oeuvre par une passerelle domestique d'un utilisateur. La passerelle domestique est reliée à un réseau de communication d'un opérateur auprès duquel l'utilisateur est abonné. Le procédé de validation comprend:
- la réception, en provenance d'un serveur de l'opérateur, d'une demande de validation relative à une transaction de paiement initiée via un envoi au serveur d'une requête de transaction de paiement comprenant un identifiant de l'utilisateur fourni par l'opérateur,
- la réception en provenance d'un deuxième terminal de l'utilisateur d'une validation de la transaction de paiement,
- l'envoi au serveur d'un message de validation de la transaction de paiement.
Avantageusement, le procédé selon l'invention permet de valider une transaction de paiement pour un utilisateur abonné auprès d'un opérateur via la passerelle domestique de l'utilisateur.
La passerelle domestique de l'utilisateur sert alors d'intermédiaire entre le serveur de l'opérateur et le deuxième terminal de l'utilisateur validant la transaction de paiement. Par exemple, le deuxième terminal de l'utilisateur peut être un téléphone mobile apte à communiquer avec la passerelle domestique, par exemple selon la technologie NFC, ou bien une carte bancaire de l'utilisateur apte à communiquer avec la passerelle domestiques soit en technologie sans fil, par exemple NFC, Wi-Fi ou Bluetooth, soit à l'aide d'un dispositif de type TPE (pour Terminal de Paiement Electronique) connecté à la passerelle domestique et apte à lire les données de la carte bancaire.
Le procédé de validation s'applique à tout type de transactions de paiement requise par l'utilisateur abonné ou un autre utilisateur (ami, famille, etc...). Avantageusement, la validation d'une transaction de paiement est sécurisée par l'utilisation d'un dispositif intermédiaire (la passerelle domestique) entre le serveur demandant la validation et le terminal requérant la transaction de paiement.
De plus, l'identifiant de l'utilisateur auprès de l'opérateur, par exemple une adresse de courriel ou un numéro de téléphone, ou tout autre identifiant spécifique fourni par l'opérateur pour ses services bancaires, permet au serveur d'identifier l'utilisateur ayant requis la transaction de paiement.

Selon un mode particulier de réalisation de l'invention, le serveur de l'opérateur peut être un serveur bancaire.
Selon un autre mode particulier de réalisation de l'invention, la transaction de paiement peut être initiée par l'utilisateur abonné auprès de l'opérateur ou par un autre utilisateur.
L'invention concerne également un procédé d'initiation d'une transaction de paiement initiée par un utilisateur via un premier terminal. Un tel procédé comprend notamment l'envoi à un serveur d'un opérateur de réseau de communication, d'une requête de transaction de paiement comprenant au moins un identifiant dudit utilisateur ou d'un autre utilisateur abonné auprès dudit opérateur.
Selon un mode particulier de réalisation de l'invention, la transaction de paiement est initiée par ledit utilisateur auprès d'un site de commerce électronique.
Ce mode particulier de réalisation de l'invention permet à un utilisateur de réaliser des achats sur des sites de commerces électroniques sans avoir à fournir ses coordonnées bancaires. Selon ce mode particulier de réalisation de l'invention, la requête de transaction de paiement est envoyée au serveur par un serveur du site de commerce électronique.
Selon un autre mode particulier de réalisation de l'invention, la transaction de paiement est initiée par ledit utilisateur auprès du serveur de l'opérateur, et le procédé comprend en outre la sélection dans un carnet d'adresses associé audit utilisateur, d'un groupe d'utilisateurs participants auxquels l'utilisateur souhaite transmettre une demande de transaction de paiement, la requête de transaction de paiement comprenant pour chaque utilisateur participant un identifiant de l'utilisateur participant fourni par ledit opérateur.
Ce mode particulier de réalisation de l'invention est avantageux en ce qu'il permet à l'utilisateur d'organiser une collecte de fonds, par exemple pour l'organisation d'un événement, auprès d'autres utilisateurs. Selon ce mode particulier de réalisation de l'invention, la collecte est plus sécurisée car il n'est pas nécessaire de passer par une plateforme tierce de collecte de fonds. Le service de collecte de fonds est directement mis en oeuvre par le service bancaire de l'opérateur de l'utilisateur auprès d'autres utilisateurs sélectionnés par l'utilisateur et connus de l'opérateur.
Avantageusement, les autres utilisateurs sont également abonnés auprès de l'opérateur. Ils peuvent participer à la collecte de fonds par exemple en validant la transaction de paiement transmise par le serveur via le procédé de validation décrit précédemment.
Avantageusement, selon ce mode particulier de réalisation de l'invention, le procédé d'initiation d'une transaction de paiement est mis en oeuvre par le premier terminal de l'utilisateur ou par une passerelle domestique de l'utilisateur.

L'invention concerne également un procédé de demande de validation d'une transaction de paiement, mis en oeuvre par un serveur d'un opérateur de réseau de communication. Un tel procédé de demande de validation comprend:
- la réception d'une requête de transaction de paiement comprenant au moins un identifiant d'un utilisateur abonné auprès dudit opérateur,
- l'envoi d'au moins une demande de validation de la transaction de paiement, à une passerelle domestique dudit utilisateur identifiée grâce à l'identifiant dudit utilisateur,
- la réception d'au moins un message de validation de la transaction de paiement en provenance de ladite passerelle domestique,
- la validation de la transaction de paiement à partir de coordonnées bancaires dudit utilisateur.
Selon un mode particulier de réalisation de l'invention, le procédé de demande de validation d'une transaction de paiement comprend en outre l'obtention des coordonnées bancaires dudit utilisateur grâce à l'identifiant dudit utilisateur auprès d'une mémoire de l'opérateur. Avantageusement, selon cette variante de réalisation, l'identifiant de l'utilisateur est couplé au niveau de l'opérateur avec les coordonnées bancaires de l'utilisateur. Ainsi, la transaction de paiement peut être réalisée sans nécessiter la transmission des coordonnées bancaires de l'utilisateur à travers le réseau de communication.

Selon un autre mode particulier de réalisation de l'invention, les coordonnées bancaires dudit utilisateur sont comprises dans le message de validation de la transaction de paiement.
Avantageusement, selon cette variante de réalisation, les coordonnées bancaires ne sont transmises qu'entre le serveur de l'opérateur et la passerelle domestique de l'utilisateur. La transaction de paiement est ainsi plus sécurisée car il n'est pas nécessaire de transmettre de coordonnées bancaires à un serveur tiers (site de commerce électronique, plateforme de collecte de fonds, ...).
Selon un autre mode particulier de réalisation de l'invention, le message de validation comprend en outre un montant relatif à la transaction de paiement.
Selon ce mode particulier de réalisation de l'invention, l'utilisateur qui valide la transaction de paiement via la passerelle domestique peut indiquer le montant de la transaction de paiement. Par exemple, dans le cas d'une collecte de fonds, l'utilisateur participant à la collecte peut ainsi indiquer le montant qu'il souhaite verser.
En variante, le montant de la transaction à réaliser peut être indiqué dans la requête de transaction de paiement et transmis dans la demande de validation de la transaction de paiement. Selon ce mode particulier de réalisation de l'invention, l'utilisateur peut alors modifier le montant de la transaction de paiement.

L'invention concerne un dispositif de validation d'une transaction de paiement. Un tel dispositif apte à être relié à un réseau de communication d'un opérateur auprès duquel un utilisateur est abonné, il comprend une unité de traitement et un module de communication configurés pour :
- recevoir, en provenance d'un serveur de l'opérateur, une demande de validation relative à une transaction de paiement initiée via un envoi au serveur d'une requête de transaction de paiement comprenant un identifiant de l'utilisateur fourni par l'opérateur,
- recevoir, en provenance d'un deuxième terminal de l'utilisateur, une validation de la transaction de paiement, et pour communiquer avec le premier module de communication,
- envoyer au serveur un message de validation de la transaction de paiement.
Selon un mode particulier de réalisation de l'invention, le dispositif de validation ci-dessus est compris dans une passerelle domestique.

L'invention concerne également un dispositif d'initiation d'une transaction de paiement initiée par un utilisateur via un premier terminal, le dispositif est configuré pour envoyer à un serveur d'un opérateur de réseau de communication, une requête de transaction de paiement comprenant au moins un identifiant dudit utilisateur ou d'un autre utilisateur abonné auprès dudit opérateur.
L'invention concerne également un dispositif de demande de validation d'une transaction de paiement, d'un opérateur de réseau de communication, configuré pour:
- recevoir une requête de transaction de paiement comprenant au moins un identifiant d'un utilisateur abonné auprès dudit opérateur,
- envoyer au moins une demande de validation de la transaction de paiement, à une passerelle domestique dudit utilisateur identifiée grâce l'identifiant dudit utilisateur,
- recevoir au moins un message de validation de la transaction de paiement en provenance de ladite passerelle domestique,
- valider la transaction de paiement à partir de coordonnées bancaires dudit utilisateur.

L'invention concerne également un programme d'ordinateur comportant des instructions pour la mise en oeuvre des procédés ci-dessus selon l'un quelconque des modes particuliers de réalisation décrits précédemment, lorsque ledit programme est exécuté par un processeur. Les procédés peuvent être mis en oeuvre de diverses manières, notamment sous forme câblée ou sous forme logicielle.
Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.
L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.
Alternativement, les supports d'enregistrement peuvent correspondre à un circuit intégré dans lequel le programme est incorporé, le circuit étant adapté pour exécuter ou pour être utilisé dans l'exécution du procédé en question.

L'invention concerne également un système validation d'une transaction de paiement, un tel système comprenant un dispositif d'initiation d'une transaction de paiement connecté à un réseau de communication d'un opérateur, selon l'un quelconque des modes particuliers de réalisation décrits ci-dessus, un dispositif de demande de validation d'une transaction de paiement, dudit opérateur, selon l'un quelconque des modes particuliers de réalisation décrits ci-dessus et au moins un dispositif de validation d'une transaction de paiement selon l'un quelconque des modes particuliers de réalisation décrits ci-dessus.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- la figure 1 illustre un environnement de mise en oeuvre de l'invention selon un mode particulier de réalisation de l'invention,
- la figure 2 illustre un environnement de mise en oeuvre de l'invention selon un autre mode particulier de réalisation de l'invention,
- la figure 3 illustre des exemples de terminaux adaptés pour valider une transaction de paiement selon un mode particulier de réalisation de l'invention,
- la figure 4 illustre des étapes des procédés d'initialisation d'une transaction de paiement, de demande de validation de la transaction de paiement et de validation de la transaction de paiement selon un mode particulier de réalisation de l'invention,
- la figure 5 illustre des étapes des procédés d'initialisation d'une transaction de paiement, de demande de validation de la transaction de paiement et de validation de la transaction de paiement selon un autre mode particulier de réalisation de l'invention,
- les figures 6, 7 et 8 illustrent des dispositifs adaptés pour mettre en oeuvre respectivement les procédés d'initialisation d'une transaction de paiement, de demande de validation de la transaction de paiement et de validation de la transaction de paiement selon un mode particulier de réalisation de l'invention.

### 5. Description d'un mode de réalisation de l'invention

### 5.1 Principe général de l'invention

Un principe général de l'invention est d'utiliser une passerelle résidentielle fournie par un opérateur de réseau de communication à un abonné pour permettre à cet utilisateur abonné de valider une transaction de paiement électronique via la passerelle résidentielle. Ainsi, les transactions de paiement sont plus sécurisées car elles nécessitent moins d'intermédiaires ayant connaissance des coordonnées bancaires de l'utilisateur.

Avantageusement, lorsque les coordonnées bancaires de l'utilisateur sont hébergées par l'opérateur de communication, il n'est plus nécessaire à l'utilisateur de transmettre ses coordonnées bancaires aux tiers avec lesquels il souhaite réaliser une transaction de paiement.

### 5.2 Modes particuliers de réalisation de l'invention.

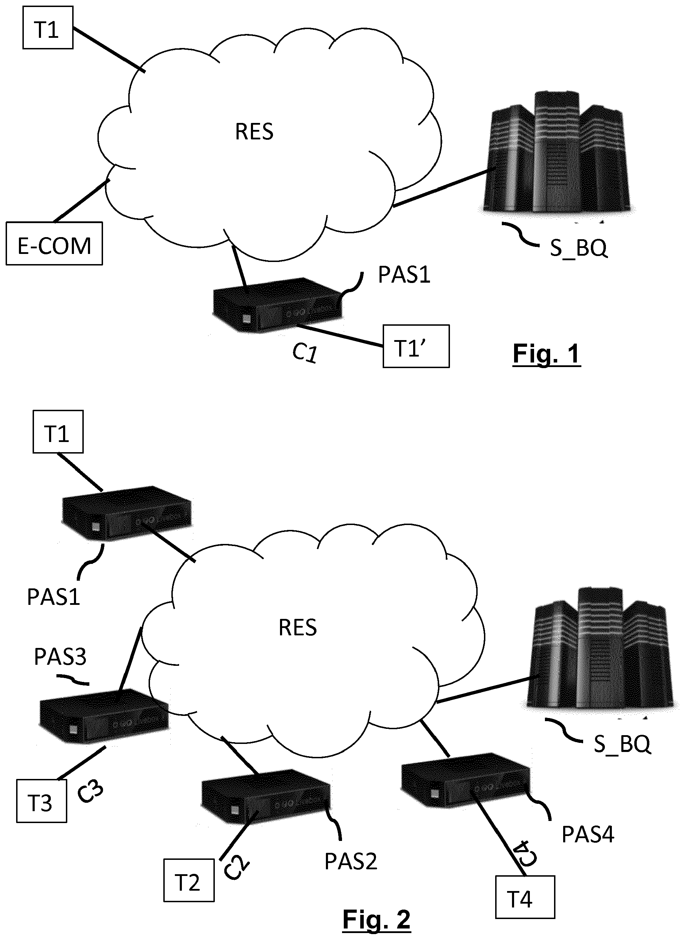

La figure 1 illustre un environnement de mise en oeuvre de l'invention selon un mode particulier de réalisation de l'invention. Un tel environnement comprend notamment un premier terminal T1 d'un utilisateur connecté à un réseau de communication RES. Par exemple, le terminal T1 est un ordinateur personnel (PC pour Personal Computer en anglais), une tablette, un téléviseur connecté, un téléphone mobile, etc....
Le terminal T1 est utilisé par un utilisateur pour initier une transaction de paiement envers un tiers. Par exemple, l'utilisateur souhaite réaliser des achats auprès d'un site de commerce en ligne hébergé par un serveur E_COM relié au réseau de communication RES.
Le réseau de communication RES est un réseau de données, par exemple un réseau Internet, ou un réseau mobile, géré par un opérateur auprès duquel l'utilisateur du terminal T1 est abonné pour accéder au réseau RES.
Selon le mode de réalisation décrit ici, l'utilisateur du terminal T1 dispose également d'une passerelle domestique PAS1 connectée au réseau RES. Une telle passerelle domestique PAS1 est fournie par l'opérateur du réseau RES pour permettre à l'utilisateur du terminal T1 d'accéder au réseau de communication RES depuis son domicile. Outre l'accès au réseau Internet, la passerelle domestique PAS1 permet également de fournir à l'utilisateur des services annexes tels que la téléphonie sur IP (pour Internet Protocol en anglais), la télévision sur IP, etc... Par exemple, l'opérateur peut également fournir des services de Vidéo à la demande ou d'autres services, payables via un compte prépayé par exemple.
L'utilisateur du terminal T1 dispose d'au moins un identifiant fourni par l'opérateur du réseau RES. Par exemple, un tel identifiant peut être un numéro de téléphone fixe ou mobile, une adresse de courrier électronique, un identifiant de contrat d'abonnement, un identifiant de compte prépayé, etc....
Selon d'autres exemples de réalisation, le terminal T1 peut également être connecté au réseau RES via la passerelle PAS1.
Selon une variante du mode de réalisation décrit ici, l'opérateur du réseau RES fournit également à ses abonnés des services bancaires. De tels services bancaires permettent notamment aux abonnés de disposer d'un compte bancaire et de coordonnées bancaires pour réaliser des transactions de paiement envers des tiers. Avantageusement, l'identifiant de l'utilisateur auprès de son opérateur est couplé avec les coordonnées bancaires de l'utilisateur auprès de l'opérateur. L'environnement de la figure 1 comprend donc également un serveur de l'opérateur S_BQ, par exemple un serveur bancaire, configuré pour traiter des requêtes de transaction de paiement et de demander une validation de la transaction de paiement à l'utilisateur.
Avantageusement, le serveur S_BQ transmet les demandes de validation de transaction de paiement à la passerelle domestique PAS1 de l'utilisateur afin que celui-ci valide les transactions de paiement auprès de la passerelle domestique PAS1 via un deuxième terminal T1'. La validation par le deuxième terminal T1' est réalisée via une connexion C1 du deuxième terminal T1' à la passerelle domestique PAS1. Une telle connexion C1 peut être une connexion filaire ou sans fil, par exemple via une technologie de type NFC (pour Near Field Communication). Selon d'autres modes de réalisation de l'invention, la connexion C1 peut être établie selon une technologie Bluetooth ou WIFI.
Selon d'autres variantes de réalisation de l'invention, la transaction de paiement initiée par l'utilisateur peut être relative à des achats de services ou de produits auprès de l'opérateur (Vidéo à la demande, services opérateur, etc....). Dans ce cas, le serveur E_COM est un serveur de l'opérateur du réseau de communication RES.

La figure 2 illustre un environnement de mise en oeuvre de l'invention selon un autre mode particulier de réalisation de l'invention. Dans cet autre mode particulier de réalisation de l'invention, le terminal T1 est connecté au réseau de communication RES via la passerelle PAS1 de l'utilisateur.
Dans l'exemple décrit ici, le terminal T1 est utilisé par l'utilisateur pour initier plusieurs transactions envers des tiers. Par exemple, l'utilisateur organise une collecte de fonds auprès d'autres utilisateurs abonnés auprès de l'opérateur de réseau RES.
L'environnement comprend donc des terminaux T2, T3 et T4 d'autres utilisateurs abonnés auprès de l'opérateur de réseau RES. Les terminaux T2, T3, T4 permettent respectivement à chaque utilisateur du terminal de valider une transaction de paiement initiée par l'utilisateur du terminal T1.
Selon le mode de réalisation décrit ici, chaque terminal T2-T4 est relié au réseau de communication RES via une passerelle domestique PAS2-PAS4 respectivement, fournie par l'opérateur du réseau RES pour permettre l'accès au réseau de communication RES. Chaque utilisateur d'un terminal T2-T4 dispose donc également d'au moins un identifiant fourni par l'opérateur du réseau RES. Par exemple, un tel identifiant peut être un numéro de téléphone fixe ou mobile, une adresse de courrier électronique, un identifiant de contrat d'abonnement, un identifiant de compte prépayé, etc....
Selon une variante du mode de réalisation décrit ici, l'opérateur du réseau RES fournit également à ses abonnés des services bancaires. De tels services bancaires permettent notamment aux abonnés de disposer d'un compte bancaire et de coordonnées bancaires pour réaliser des transactions de paiement envers des tiers. Avantageusement, l'identifiant de l'utilisateur auprès de son opérateur est couplé avec les coordonnées bancaires de l'utilisateur auprès de l'opérateur. L'environnement de la figure 2 comprend donc également un serveur de l'opérateur S_BQ, par exemple un serveur bancaire, configuré pour traiter des requêtes de transaction de paiement et demander une validation d'une transaction de paiement à un utilisateur abonné.
Avantageusement, le serveur S_BQ transmet les demandes de validation de transaction de paiement aux passerelles domestiques PAS2-PAS4 afin que chaque utilisateur invité à participer à la collecte valide la transaction de paiement auprès de sa passerelle domestique via son terminal T2-T4. Comme décrit en relation avec la figure 1, la validation par un terminal T2-T4 est réalisée via une connexion C2-C4 du terminal T2-T4 à la passerelle domestique PAS2-PAS4. De telles connexions C2-C4 peuvent être filaire ou sans fil, par exemple via une technologie de type NFC (pour Near Field Communication).

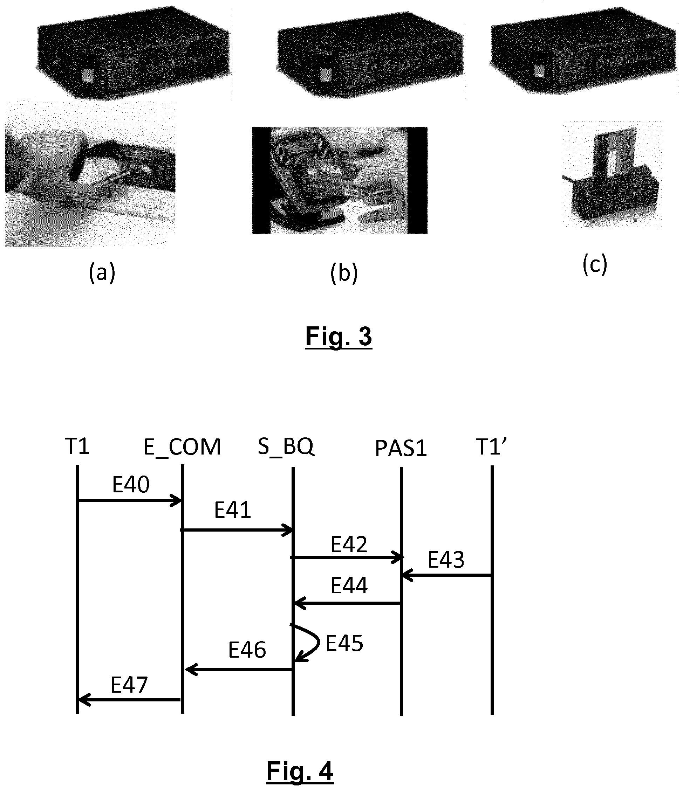

La figure 3 illustre des exemples de terminaux adaptés pour valider une transaction de paiement selon un mode particulier de réalisation de l'invention, par exemple les terminaux T2-T4 de la figure 2 ou le terminal T1' de la figure 1.
Par exemple, un tel terminal peut être un smartphone (pour téléphone intelligent, (a) sur la figure 3) adapté pour communiquer avec une passerelle domestique pour valider un paiement. Par exemple, la validation est réalisée au moyen d'une application dédiée installée sur le terminal. Le terminal et la passerelle domestique peuvent communiquer selon la technologie NFC lorsque le terminal est à proximité de la passerelle domestique.
Selon un autre exemple ((b) et (c) sur la figure 3), le terminal est une carte à puce d'un organisme bancaire. Dans ce cas, la passerelle domestique est équipée de moyens de paiement électroniques (TPE pour terminal de paiement électronique), tel qu'un lecteur de carte sans contact (b) ou un lecteur de carte à puce (c).
Les variantes (b) et (c) illustrées en figure 3 montrent des les moyens de paiement électroniques externes reliés de manière filaire à la passerelle domestique. Selon d'autres variantes, ces moyens peuvent être intégrés dans la passerelle domestique.

La figure 4 illustre des étapes des procédés d'initialisation d'une transaction de paiement, de demande de validation de la transaction de paiement et de validation de la transaction de paiement selon le mode particulier de réalisation de l'invention illustré en figure 1.
Lors d'une étape E40, l'utilisateur du terminal T1 effectue une commande auprès du serveur du site de commerce électronique E_COM. Afin de régler sa commande auprès du serveur E_COM, l'utilisateur fournit au site de commerce électronique un identifiant connu de l'opérateur auprès duquel il est abonné, par exemple une adresse de courrier électronique, un numéro de téléphone, ou autre.
Lors d'une étape E41, le serveur E_COM envoie une requête de transaction de paiement au serveur bancaire S_BQ de l'opérateur. Une telle requête de transaction de paiement comprend l'identifiant de l'utilisateur, et éventuellement le montant de la transaction à valider. Le serveur E_COM a préalablement déterminé vers quel serveur bancaire transmettre la requête de transaction, par exemple, en fonction d'un nom de domaine indiqué dans l'identifiant transmis par l'utilisateur, ou bien à partir d'une autre information fournie par l'utilisateur au serveur E_COM, par exemple via son compte client.
Lors de l'étape E41, le serveur bancaire S_BQ reçoit la requête de transaction de paiement et envoie, lors d'une étape E42, une demande de validation de la transaction de paiement, à la passerelle domestique PAS1 de l'utilisateur. La passerelle domestique PAS1 est par exemple identifiée grâce à l'identifiant de l'utilisateur fournit dans la requête de transaction. Le serveur S_BQ peut communiquer avec des serveurs du réseau de communication de l'opérateur afin d'obtenir l'adresse de la passerelle domestique correspondant à l'identifiant fourni.
Lorsque la passerelle PAS1 reçoit la demande de validation de paiement, elle invite l'utilisateur à valider le paiement via son terminal T1'. Par exemple, elle peut émettre un signal lumineux via une diode dédiée, ou bien afficher un message sur un écran d'un terminal connecté à la passerelle domestique ou sur le terminal T1', ou bien émettre un signal audio, etc...

Lors d'une étape E43, l'utilisateur valide alors la transaction de paiement au moyen du terminal T1', par exemple en approchant le terminal T1' de la passerelle (figure 3(a)), lorsque le terminal T1' est un téléphone mobile adapté pour communiquer sans fil avec la passerelle PAS1. Selon une autre variante, l'utilisateur peut actionner un bouton spécifique sur l'application du terminal T1' pour valider la transaction de paiement et le terminal T1' transmet un message de validation à la passerelle domestique PAS1 par exemple via une connexion WIFI. Selon une autre variante, le terminal T1' est compris dans la passerelle domestique PAS1 et représenté sur la passerelle domestique PAS1 par un bouton dédié que l'utilisateur actionne pour valider la transaction de paiement.
Dans l'exemple décrit ici, le terminal T1' transmet à la passerelle domestique PAS1 un signal validant la transaction de paiement. En variante, le terminal T1' peut également transmettre les coordonnées bancaires à utiliser pour réaliser la transaction de paiement. Par exemple, lorsque la passerelle PAS1 est équipée de moyens de paiement électroniques, l'utilisateur peut utiliser une carte bancaire lue par la passerelle domestique PAS1 pour régler sa commande, ou bien une carte de crédit prépayée, etc...
Dans l'exemple décrit ici le terminal T1 initiant la transaction de paiement et le terminal T1' validant la transaction de paiement sont deux terminaux distincts. Dans un autre mode de réalisation, les terminaux T1 et T1' peuvent être un seul et même terminal connecté à la passerelle PAS1.

Lors d'une étape 44, la passerelle domestique PAS1 transmet un message de validation de la transaction de paiement au serveur bancaire S_BQ. Eventuellement le message de validation comprend les coordonnées bancaires de l'utilisateur à utiliser pour réaliser la transaction de paiement. De telles coordonnées bancaires peuvent être fournies par le terminal T1' lors de l'étape E43 ou bien avoir été préalablement mémorisée par la passerelle domestique PAS1.
Lorsque les coordonnées bancaires ne sont pas fournies par la passerelle domestique PAS1, lors d'une étape 45, le serveur S_BQ les obtient, par exemple auprès d'un espace de stockage sécurisé de l'opérateur. Selon cette variante, les coordonnées bancaires de l'utilisateur sont mémorisées en association avec l'identifiant de l'utilisateur auprès de l'opérateur.
Lors d'une étape E46, le serveur S_BQ valide la transaction de paiement auprès du serveur E_COM, en envoyant un message d'acceptation de la transaction de paiement.
Lors d'une étape E47, le serveur E_COM confirme à l'utilisateur du terminal T1 que la transaction de paiement est validée.

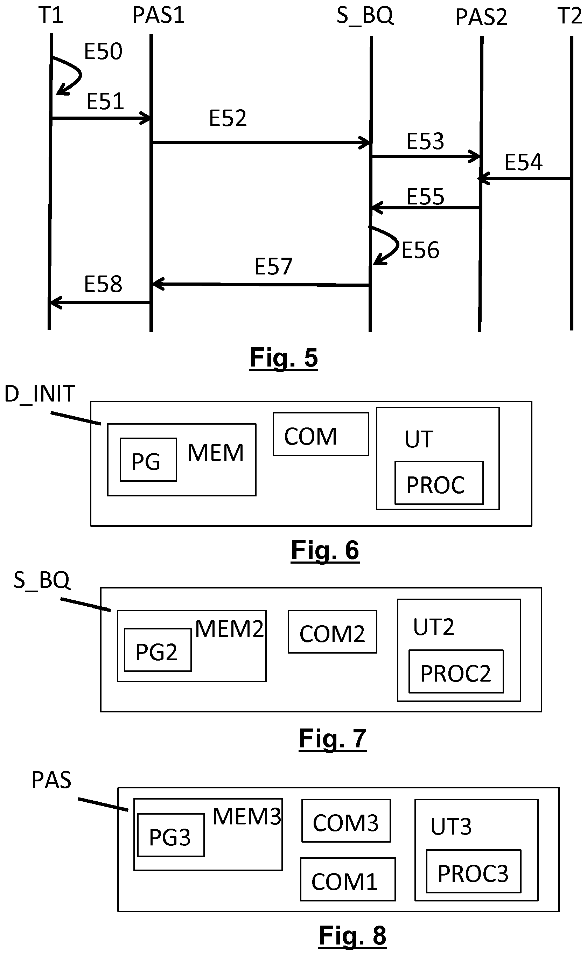

La figure 5 illustre des étapes des procédés d'initialisation d'une transaction de paiement, de demande de validation de la transaction de paiement et de validation de la transaction de paiement selon le mode particulier de réalisation de l'invention illustré en figure 2. Selon le mode de réalisation décrit ici, l'utilisateur du terminal T1 souhaite organiser une collecte de fonds auprès d'autres utilisateurs.
Lors d'une étape E50, l'utilisateur sélectionne, par exemple dans un carnet d'adresses, un groupe d'utilisateurs participants auxquels il souhaite transmettre une invitation pour participer à la collecte de fonds. Par exemple, l'utilisateur du terminal T1 sélectionne les utilisateurs des terminaux T2, T3 et T4 de la figure 2.
Lors de l'étape E50, le terminal T1 obtient donc un identifiant pour chaque utilisateur participant, un tel identifiant correspondant à un identifiant de l'utilisateur participant fourni par l'opérateur.
Lors d'une étape E51, l'utilisateur du terminal T1 effectue une demande de collecte auprès du serveur bancaire S_BQ, par exemple en utilisant une application fournie par la passerelle PAS1, en fournissant la liste des identifiants des utilisateurs participants qu'il a sélectionné lors de l'étape E50 et éventuellement un montant minimum demandé aux utilisateurs participants.
Lors d'une étape E52, la passerelle domestique PAS1 envoie au serveur bancaire S_BQ une requête de transaction de paiement comprenant les identifiants des utilisateurs participants sélectionnés.
Lors de l'étape E52, le serveur bancaire S_BQ reçoit la requête de transaction de paiement et envoie, lors d'une étape E53, une demande de validation de la transaction de paiement, à chaque utilisateur participant sélectionné. Pour cela, le serveur envoie une demande de validation à chaque passerelle domestique PAS2, PAS3 et PAS4. Pour plus de simplicité, on a représenté les échanges qu'avec la passerelle PAS2 et le terminal T2. Les échanges avec les passerelles PAS3 et PAS4 et les terminaux T3 et T4 sont similaires.
La passerelle domestique PAS2 est identifiée grâce à l'identifiant de l'utilisateur participant fournit dans la requête de transaction. Le serveur S_BQ peut éventuellement communiquer avec des serveurs du réseau de communication de l'opérateur afin d'obtenir l'adresse de la passerelle domestique correspondant à l'identifiant fourni.
La demande de validation de la transaction de paiement peut comprendre le montant minimum indiqué par l'utilisateur du terminal T1.
Lorsque la passerelle PAS2 reçoit la demande de validation de paiement, elle invite l'utilisateur participant à valider le paiement via son terminal T2. Par exemple, elle peut émettre un signal lumineux via une diode dédiée, ou bien afficher un message sur un écran d'un terminal connecté à la passerelle domestique ou sur le terminal T2, ou bien émettre un signal audio, etc...

Lors d'une étape E54, l'utilisateur du terminal T2 valide alors la transaction de paiement au moyen du terminal T2, par exemple en approchant le terminal T2 de la passerelle (figure 3(a)), lorsque le terminal T2 est un téléphone mobile adapté pour communiquer sans fil avec la passerelle PAS2. Selon une autre variante, l'utilisateur peut actionner un bouton spécifique sur l'application du terminal T2 pour valider la transaction de paiement et le terminal T2 transmet un message de validation à la passerelle domestique PAS2 par exemple via une connexion WIFI.
Dans l'exemple décrit ici, le terminal T2 transmet à la passerelle domestique PAS2 un signal validant la transaction de paiement. En variante, le terminal T2 peut également transmettre les coordonnées bancaires à utiliser pour réaliser la transaction de paiement. Par exemple, lorsque la passerelle PAS2 est équipée de moyens de paiement électroniques, l'utilisateur peut utiliser une carte bancaire lue par la passerelle domestique PAS2, ou bien une carte de crédit prépayée, etc...
Selon un exemple particulier de réalisation de l'invention, l'utilisateur du terminal T2 peur modifier le montant de la transaction de paiement à valider, en spécifiant un nouveau montant, soit via l'application du terminal T2 lorsque le terminal T2 est un smarpthone, soit sur invitation du lecteur de cartes lorsque le terminal T2 est un TPE et que celui-ci dispose d'un clavier.
Lors d'une étape E55, la passerelle domestique PAS2 transmet un message de validation de la transaction de paiement au serveur bancaire S_BQ. Eventuellement le message de validation comprend les coordonnées bancaires de l'utilisateur à utiliser pour réaliser la transaction de paiement et/ou le montant modifié par l'utilisateur. De telles coordonnées bancaires peuvent être fournies par le terminal T2 lors de l'étape E54 ou bien avoir été préalablement mémorisée par la passerelle domestique PAS2.
Lorsque les coordonnées bancaires ne sont pas fournies par la passerelle domestique PAS2, lors d'une étape E56, le serveur S_BQ les obtient, par exemple auprès d'un espace de stockage sécurisé de l'opérateur. Selon cette variante, les coordonnées bancaires de l'utilisateur participant sont mémorisées en association avec l'identifiant de l'utilisateur participant auprès de l'opérateur.
Lors d'une étape E57, le serveur S_BQ valide la transaction de paiement pour l'utilisateur du terminal T2 auprès de la passerelle PAS1, en envoyant un message d'acceptation de la transaction de paiement, et éventuellement le montant spécifié par l'utilisateur.
Lors d'une étape E58, la passerelle domestique PAS1 confirme à l'utilisateur du terminal T1 que la transaction de paiement est validée pour l'utilisateur du terminal T2.

La figure 6 présente la structure simplifiée d'un dispositif D_INIT adapté pour mettre en oeuvre le procédé d'initialisation d'une transaction de paiement selon l'un quelconque des modes particuliers de réalisation de l'invention décrits précédemment.
Selon un mode particulier de réalisation de l'invention, le dispositif D_INIT a l'architecture classique d'un ordinateur et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé d'initialisation d'une transaction de paiement tel que décrit précédemment, lorsque le programme est exécuté par le processeur PROC.
A l'initialisation, les instructions de code du programme d'ordinateur PG sont par exemple chargées dans une mémoire avant d'être exécutées par le processeur PROC. Le processeur PROC de l'unité de traitement UT met notamment en oeuvre les étapes du procédé d'initialisation d'une transaction de paiement selon l'un quelconque de modes particuliers de réalisation décrits en relation avec la figure 4 ou 5, selon les instructions du programme d'ordinateur PG.
Selon un mode particulier de réalisation de l'invention, le dispositif D_INIT comprend un module de communication COM configuré pour envoyer à un serveur bancaire d'un opérateur de réseau de communication, une requête de transaction de paiement comprenant au moins un identifiant d'un utilisateur abonné auprès dudit opérateur.
Selon un mode particulier de réalisation de l'invention, le dispositif D_INIT décrit précédemment est compris dans une passerelle domestique PAS1, ou un terminal.
La figure 7 présente la structure simplifiée d'un dispositif S_BQ adapté pour mettre en oeuvre le procédé de demande de validation d'une transaction de paiement selon l'un quelconque des modes particuliers de réalisation de l'invention décrits précédemment.
Selon un mode particulier de réalisation de l'invention, le dispositif S_BQ a l'architecture classique d'un ordinateur et comprend notamment une mémoire MEM2, une unité de traitement UT2, équipée par exemple d'un processeur PROC2, et pilotée par le programme d'ordinateur PG2 stocké en mémoire MEM2. Le programme d'ordinateur PG2 comprend des instructions pour mettre en oeuvre les étapes du procédé de demande de validation d'une transaction de paiement tel que décrit précédemment, lorsque le programme est exécuté par le processeur PROC2.
A l'initialisation, les instructions de code du programme d'ordinateur PG2 sont par exemple chargées dans une mémoire avant d'être exécutées par le processeur PROC2. Le processeur PROC2 de l'unité de traitement UT2 met notamment en oeuvre les étapes du procédé de demande de validation d'une transaction de paiement selon l'un quelconque de modes particuliers de réalisation décrits en relation avec la figure 4 ou 5, selon les instructions du programme d'ordinateur PG2.
Selon un mode particulier de réalisation de l'invention, le dispositif S_BQ comprend un module de communication COM2 configuré pour communiquer avec d'autres serveurs de l'opérateur, des serveurs connectés au réseau de communication et des passerelles domestiques reliées au réseau de communication.
Le dispositif S_BQ est en particulier configuré pour
- recevoir une requête de transaction de paiement comprenant au moins un identifiant d'un utilisateur abonné auprès dudit opérateur,
- envoyer au moins une demande de validation de la transaction de paiement, à une passerelle domestique dudit utilisateur identifiée grâce l'identifiant dudit utilisateur,
- recevoir au moins un message de validation de la transaction de paiement en provenance de ladite passerelle domestique, et
- valider la transaction de paiement à partir de coordonnées bancaires dudit utilisateur. Selon un mode particulier de réalisation de l'invention, le dispositif S-BQ décrit précédemment est compris dans un serveur.

La figure 8 présente la structure simplifiée d'un dispositif PAS adapté pour mettre en oeuvre le procédé de validation d'une transaction de paiement selon l'un quelconque des modes particuliers de réalisation de l'invention décrits précédemment.
Selon un mode particulier de réalisation de l'invention, le dispositif PAS a l'architecture classique d'un ordinateur et comprend notamment une mémoire MEM3, une unité de traitement UT3, équipée par exemple d'un processeur PROC3, et pilotée par le programme d'ordinateur PG3 stocké en mémoire MEM3. Le programme d'ordinateur PG3 comprend des instructions pour mettre en oeuvre les étapes du procédé de validation d'une transaction de paiement tel que décrit précédemment, lorsque le programme est exécuté par le processeur PROC3.
A l'initialisation, les instructions de code du programme d'ordinateur PG3 sont par exemple chargées dans une mémoire avant d'être exécutées par le processeur PROC3. Le processeur PROC3 de l'unité de traitement UT3 met notamment en oeuvre les étapes du procédé de validation d'une transaction de paiement selon l'un quelconque de modes particuliers de réalisation décrits en relation avec la figure 4 ou 5, selon les instructions du programme d'ordinateur PG3.
Selon un mode particulier de réalisation de l'invention, le dispositif PAS comprend un module de communication COM3 configuré pour communiquer avec des serveurs connectés au réseau de communication, tels qu'un serveur bancaire, un serveur de commerce électronique, etc...

Selon un mode particulier de réalisation de l'invention, le dispositif PAS comprend un autre module de communication COM1 configuré pour communiquer avec un terminal de l'utilisateur, tel que le terminal T1, T1' décrit en relation avec les figures 1 et 3, ou les terminaux T1, T2, T3 et T4 décrit en relation avec les figures 2 et 4.
Le dispositif PAS est en particulier configuré pour:
- recevoir, en provenance d'un serveur bancaire de l'opérateur, une demande de validation d'une transaction de paiement relative à une transaction de paiement initiée par un utilisateur,
- recevoir, en provenance d'un terminal de l'utilisateur, une validation de la transaction de paiement, et
- envoyer au serveur bancaire un message de validation de la transaction de paiement. Selon un mode particulier de réalisation de l'invention, le dispositif PAS décrit précédemment est compris dans une passerelle domestique.

## Revendications

1. Procédé de validation d'une transaction de paiement mis en oeuvre par une passerelle domestique (PAS1) d'un utilisateur, ladite passerelle domestique étant apte à être reliée à un réseau de communication d'un opérateur auprès duquel l'utilisateur est abonné, le procédé de validation comprend:
- la réception (E42), en provenance d'un serveur de l'opérateur (S_BQ), d'une demande de validation relative à une transaction de paiement initiée (E40) via un envoi (E41) au serveur d'une requête de transaction de paiement comprenant un identifiant de l'utilisateur fourni par l'opérateur,
- la réception (E43) en provenance d'un deuxième terminal (T1') de l'utilisateur d'une validation de la transaction de paiement,
- l'envoi (E44) au serveur (S_BQ) d'un message de validation de la transaction de paiement.

2. Procédé d'initiation d'une transaction de paiement initiée par un utilisateur via un premier terminal (T1) auprès d'un serveur (S_BQ) d'un opérateur de réseau de communication, le procédé comprend:
- la sélection dans un carnet d'adresses associé audit utilisateur, d'un groupe d'utilisateurs participants auxquels l'utilisateur souhaite transmettre une demande de transaction de paiement,
- l'envoi (E41) au serveur (S_BQ), d'une requête de transaction de paiement comprenant pour chaque utilisateur participant un identifiant de l'utilisateur participant fourni par ledit opérateur.

3. Procédé de demande de validation d'une transaction de paiement, mis en oeuvre par un serveur (S_BQ) d'un opérateur de réseau de communication, comprenant:
- la réception (E41) d'une requête de transaction de paiement comprenant au moins un identifiant d'un utilisateur abonné auprès dudit opérateur,
- l'envoi (E42) d'au moins une demande de validation de la transaction de paiement, à une passerelle domestique (PAS1) dudit utilisateur identifiée grâce à l'identifiant dudit utilisateur,
- la réception (E44) d'au moins un message de validation de la transaction de paiement en provenance de ladite passerelle domestique,
- la validation (E46) de la transaction de paiement à partir de coordonnées bancaires dudit utilisateur.

4. Procédé de demande de validation d'une transaction de paiement selon la revendication 3, comprenant en outre l'obtention des coordonnées bancaires dudit utilisateur grâce à l'identifiant dudit utilisateur auprès d'une mémoire de l'opérateur.

5. Procédé de demande de validation d'une transaction de paiement selon la revendication 3 ou procédé de validation d'une transaction de paiement selon la revendication 1, dans lequel les coordonnées bancaires dudit utilisateur sont comprises dans le message de validation de la transaction de paiement.

6. Procédé de demande de validation selon la revendication 3 ou procédé de validation d'une transaction de paiement selon la revendication 1, dans lequel le message de validation comprend en outre un montant relatif à la transaction de paiement.

7. Dispositif de validation d'une transaction de paiement, ledit dispositif étant relié à un réseau de communication d'un opérateur auprès duquel un utilisateur est abonné, le dispositif de validation comprend une unité de traitement et un module de communication configurés pour :
- recevoir, en provenance d'un serveur de l'opérateur, une demande de validation relative à une transaction de paiement initiée via un envoi au serveur d'une requête de transaction de paiement comprenant un identifiant de l'utilisateur fourni par l'opérateur,
- recevoir, en provenance d'un deuxième terminal de l'utilisateur, une validation de la transaction de paiement,
- envoyer au serveur un message de validation de la transaction de paiement.

8. Passerelle domestique comprenant un dispositif de validation selon la revendication 7.

9. Dispositif d'initiation d'une transaction de paiement initiée par un utilisateur via un premier terminal auprès d'un serveur d'un opérateur de réseau de communication, le dispositif est configuré pour sélectionner dans un carnet d'adresses associé audit utilisateur, un groupe d'utilisateurs participants auxquels l'utilisateur souhaite transmettre une demande de transaction de paiement, et envoyer au serveur une requête de transaction de paiement comprenant pour chaque utilisateur participant un identifiant de l'utilisateur participant fourni par ledit opérateur.

10. Dispositif de demande de validation d'une transaction de paiement, d'un opérateur de réseau de communication, configuré pour:
- recevoir une requête de transaction de paiement comprenant au moins un identifiant d'un utilisateur abonné auprès dudit opérateur,
- envoyer au moins une demande de validation de la transaction de paiement, à une passerelle domestique dudit utilisateur identifiée grâce l'identifiant dudit utilisateur,
- recevoir au moins un message de validation de la transaction de paiement en provenance de ladite passerelle domestique,
- valider la transaction de paiement à partir de coordonnées bancaires dudit utilisateur.

11. Système de validation de transaction de paiement comprenant:
- un dispositif d'initiation d'une transaction de paiement selon la revendication 9, connecté à un réseau de communication d'un opérateur,
- un dispositif de demande de validation d'une transaction de paiement, dudit opérateur, selon la revendication 10,
- au moins un dispositif de validation d'une transaction de paiement selon la revendication 7.

12. Programme d'ordinateur comportant des instructions pour la mise en oeuvre du procédé d'initiation d'une transaction de paiement selon la revendication 2, et/ou des instructions pour la mise en oeuvre du procédé de validation d'une transaction de paiement selon la revendication 1, lorsque le programme est exécuté par un processeur.

13. Programme d'ordinateur comportant des instructions pour la mise en oeuvre du procédé de demande de validation d'une transaction de paiement selon l'une quelconque des revendications 3 à 6.
